# EUROPEAN PATENT SPECIFICATION

(11) **EP 3 392 099 B1**
(45) Date of publication and mention of the grant of the patent: **25.11.2020**
(21) Application number: 17167377.5
(22) Date of filing: 20.04.2017
(51) Int. Cl.: B60S 1/50

(54) **WASHER FLUID SYSTEM**
SCHEIBENREINIGUNGSSYSTEM
SYSTÈME DE FLUIDE DE LAVE-GLACE

(43) Date of publication of application: 24.10.2018
(73) Proprietor: Volvo Car Corporation, 40 531 Göteborg (SE)
(72) Inventor: Hasagic, Samir, 41835 Göteborg (SE); Paulsson, Mattias, 41729 Göteborg (SE); Jannerland, Anders, 41457 Göteborg (SE)
(74) Representative: Kransell & Wennborg KB

(56) References cited:
- DE-U1-202016 106 334

## Description

### TECHNICAL FIELD

The present disclosure relates to a washer fluid system for a vehicle. The disclosure further relates to a vehicle comprising the washer fluid system.

### BACKGROUND

In a modern vehicle washer fluid is utilized to help keeping the windscreen clean. Washer fluid may also be utilized for other vehicular windows, like for the rear window, or for the glasses of lights, such as headlights. Further, washer fluid may be utilized to give one or more sensor of the vehicle an undisturbed field of view.

Typically a washer fluid system comprises a reservoir adapted to contain washer fluid, which reservoir is located below the bonnet. Further, a filling unit with an aperture utilized to fill washer fluid into the washer fluid system is typically located in the vicinity of the reservoir. Therefore, a person wanting to fill the washer fluid system with more washer fluid usually has to open the bonnet and lean in over the engine compartment in order to reach the filling unit and be able to pour washer fluid into it. Opening the bonnet as well as the handling inside the engine compartment involves a number of steps before filling is ready and the vehicle is ready to drive off again. Moreover, there is a high risk of getting dirty by touching against a possibly dirty vehicle.

Document DE 20 2016 106334 U1 relates to a front grill emblem, which may be opened to allow unlocking of a bonnet and filling of washer fluid into a washer fluid system in a vehicle.

Document DE 10 2015 204 791 A1 relates to a washer fluid system. Washer fluid may be filled through a filling unit, which is accessible from the outside of the vehicle without opening the bonnet. This is achieved in that the filling unit is arranged below one of the windshield wipers in the region between the windshield and the bonnet. In an inactive position of the filling unit, it is at least partially covered by an end portion of the bonnet. The filling unit can be moved from its inactive position into an operating position accessible from the outside of the vehicle, when the windscreen wiper is pivoted upwards. In this operating position, the washer fluid can be filled into the filling unit.

However, also for a washer fluid system according to DE 10 2015 204 791 there is a high risk of getting dirty, since the person filling the washer has to lean in over the vehicle. Further there are a number of steps needed to perform the operation of filling the washer fluid, e.g. pivoting the windscreen wiper.

### SUMMARY

The object of the present disclosure is to overcome or ameliorate at least one of the disadvantages of the prior art, or to provide a useful alternative.

The object above may be achieved by the subject-matter of claim 1. Embodiments are set forth in the appended dependent claims, in the following description and in the drawings.

Thus, the invention relates to a washer fluid system for a vehicle. The washer fluid system comprises a reservoir adapted to contain washer fluid, a filling unit comprising an aperture for filling washer fluid into the reservoir and a conduit providing a fluid connection from the filling unit to the reservoir. The filling unit is transitable between an inactive position and a fill position. The washer fluid system further comprises a hatch being transitable between a closed position and an open position. The filling unit is attached to, or integrated with, the hatch, such that the filling unit is displaced together with the hatch when transiting from the closed position to the open position, the filling unit thereby transiting from the inactive position to the fill position.

Directions as used herein, e.g. horizontal, vertical, lateral, relate to when the washer fluid system is mounted in the vehicle, which stands on flat ground. The washer fluid system may be manufactured, stored, transported and sold as a separate unit. In that case, the directions may differ from when mounted in the vehicle.

The hatch and the filling unit of the washer fluid system disclosed herein are accessible from the outside of the vehicle without opening the bonnet.

The closed position of the hatch corresponds to the inactive position of the filling unit and the open position of the hatch corresponds to the fill position of the filling unit. The fill position may also be called the operating position.

In the fill position of the filling unit, a person standing outside the vehicle can easily fill washer fluid into the washer fluid system. The filling unit is then easily accessible. The person do not have to lean over the vehicle as for some prior art washer fluid systems, e.g. for that of DE 10 2015 204 791. Hence the risk of getting dirty by touching against a dirty vehicle is reduced or, for many cases, avoided.

The inactive position of the filling unit is used when driving or parking the vehicle. The filling unit is then hidden behind the hatch. Thereby the filling unit is protected from the ambient environment by the hatch. Further, the hatch may be utilized to minimize the risk that an unauthorized person would tamper with or steal washer fluid.

With the washer fluid system according to the invention, it is possible to considerably reduce the number of steps for filling washer fluid as compared to a prior art washer fluid system. The hatch may e.g. be opened by the person going to fill washer fluid by pushing the hatch inwards, such that it is released and pops out. Alternatively, the person may press a button or other control element on the inside or outside of the vehicle. The hatch may then be manually displaced to the open position by the person or the hatch may be biased towards the open position by e.g. a spring. Then the person can fill the washer fluid, e.g. until a washer fluid level is visible in the filling unit or to a predefined maximum level. Thereafter the person may close the hatch, thereby returning it to the closed position and hence also returning the filling unit to the inactive position.

The aperture of the filling unit preferably has an oblong shape, which facilitates filling of the washer fluid. The aperture is further preferably large enough to help the person performing the filling not to pour any washer fluid outside of the aperture.

The hatch may be configured to form a part of a body of the vehicle, e.g. a part of a fender, door or bonnet of the vehicle. The hatch may therefore have a corresponding surface treatment as the body of the vehicle, e.g. having the same colour or material. The hatch may form a part of a front fender, but the hatch may also be located elsewhere in the vehicle, e.g. forming a part of the grill, a bonnet, any of the doors or a rear fender. It has been found convenient to provide the hatch at the same side of the vehicle as a tank filler cap, such that washer fluid and fuel can be filled from the same side of the vehicle.

If the hatch extends in the vertical direction forming a portion of a side of the vehicle, e.g. integrated in a fender or door of the vehicle, a side wall of the filling unit may be attached to, or be integrated in, the hatch. The hatch may in that case constitute the side wall of the filling unit. In that case, the aperture of the filling unit will be perpendicular or substantially perpendicular to the extension plane of the hatch.

The hatch is transitable between the closed position and the open position by means of a displacement comprising a pivotal displacement around a pivot arm, the pivot arm preferably being comprised in, or constituting a part of, the filling unit. Thereby the filling unit makes a displacement comprising a pivotal displacement from the inactive position to the fill position, since the filling unit is attached to, or integrated with, the hatch. The pivot arm facilitates the pivotal displacement. The pivotal displacement may be in the range of 45-135 degrees, e.g. in the range of 60-120 degrees.

As an alternative or a complement to the pivot arm being comprised in or constituting a part of the filling unit, the hatch may comprise its own hinges.

As a complement to the pivotal displacement, the displacement between the closed position and the open position of the hatch, and thus also of the displacement of the filling unit, may comprise a linear displacement.

The filling unit comprises a tubular structure, adapted to extend in a vertical direction to connect to the conduit. A side wall of the tubular structure facing in the direction towards the aperture of the filling unit may be at least partly open to allow flow of the washer fluid into the tubular structure. The tubular structure is thus configured such that the washer fluid can flow from the aperture, via the tubular structure and the conduit to the reservoir during filling of washer fluid.

The tubular structure may constitute the pivot arm of the pivotal displacement, such that a hinge is integrated in the filling unit. Hence the tubular structure may combine two different functions: providing the pivotal displacement and forming a fluid connection for the washer fluid. Alternatively, the tubular structure may be located around the pivot arm, preferably such that the tubular structure is coaxial with the pivot arm.

As an alternative to utilizing the pivot arm as part of the fluid connection, the pivot arm may be arranged in the filling unit but separate from the tubular structure. Nevertheless, the pivot arm preferably forms an integral part of the filling unit, e.g. being moulded as an integral unit.

The conduit, or at least a portion of the conduit, may be flexible, e.g. by being curvable and/or by having a variable length.

The conduit may e.g. have a flexible wall, such as a tube with an expandable corrugated wall, which is easily flexed. As mentioned above, the filling unit is attached to, or integrated with, the hatch. Due to the flexibility of the conduit, the filling unit is able to be displaced together with the hatch, when the hatch is transited to the open position.

During this displacement to the fill position of the filling unit, the conduit may be curved to follow the displacement of the hatch, e.g. if the hatch is pivoted to its open position. The flexible portion of the conduit may e.g. be curved by at least 90 degrees or at least 135 degrees, depending on how far the hatch is pivoted.

In addition, or as a complement to the curvability, the conduit may be flexible by having a variable length, wherein the length is longer in the fill position of the filling unit than in the inactive position of the filling unit. The conduit, or the portion of the conduit, may e.g. have an expandable corrugated wall, which is expandable and/or may comprise telescoping portions. Thereby the filling unit may be pulled out when opening the hatch and displacing it to the open position.

The washer fluid system may comprise a housing adapted to contain the filling unit when in the inactive position. The housing has an opening, through which the filling unit is transitable to the fill position, the hatch in the closed position being adapted to cover the opening of the housing. Thereby the filling unit is completely contained in the housing when in the inactive position, e.g. when driving or parking.

The housing and the filling unit may form a common module, which facilitates mounting in the vehicle, since the module may be mounted as one unit. The housing may be located behind a front fender, a rear fender, any of the doors grill, or below a bonnet. The hatch may be formed as a part of the housing. A whole side wall of the housing, or only a portion thereof, may be constituted by the hatch. The hatch may be hingedly connected to the housing. As mentioned above, the hinge may be comprised in the filling unit, e.g. being constituted by the tubular structure. As an alternative or a complement, the hatch may have its own hinge or hinges.

The housing may comprise a ceiling adapted to form a cover of the aperture of the filling unit, when the filling unit is in the inactive position. Thereby the ceiling helps to prevent that washer fluid is splashed during driving on e.g. a bumpy road. By utilizing the ceiling to cover the aperture, there is no need for a separate cover of the aperture, as is common in prior art systems. This saves time and effort, as well as reduces the risk of getting dirty, when filling the washer fluid, since there is no extra cover to remove before filling and to put back afterwards. There is further no risk of losing such a separate cover.

A side wall of the filling unit may comprise an upper wall portion being substantially horizontal and the ceiling of the housing may comprise a top sealing adapted to seal between the ceiling and the upper wall portion of the filling unit around at least a portion of a circumference of the aperture of the filling unit, preferably around the whole circumference, when the filling unit is in the inactive position. Hence the top sealing is adapted to seal in the vertical direction. Thereby the top sealing together with the ceiling of the housing help to prevent that washer fluid is splashed during driving on e.g. a bumpy road. A width of the upper wall portion may be in the range of 2-20 mm, preferably 5-15 mm. As an alternative or a complement, the upper wall portion may comprise a corresponding sealing facing upwards against the ceiling of the housing.

A side wall of the filling unit may comprise a side sealing adapted to seal between the filling unit and a side wall of the housing. The side sealing is adapted to seal in the lateral direction. The side sealing together with the ceiling of the housing help to prevent that washer fluid is splashed during driving on e.g. a bumpy road. The side sealing is located close to the aperture of the filling unit, i.e. close to the upper edge of the side wall of the filling unit. The side sealing may face in a direction towards the vehicle. Purely as an example, the side sealing may be located at an inner side wall of the portion of the filling unit, which inner side wall is attached to, or integrated in the hatch, and at an outer side wall for the rest of the circumference around the aperture of the filling unit.

The side sealing of the filling unit may be integrated in the filling unit, e.g. by means of two-component injection moulding.

The side wall of the housing may comprise a wall sealing adapted to seal between the filling unit and the side wall of the housing. The wall sealing together with the ceiling of the housing help to prevent that washer fluid is splashed during driving on e.g. a bumpy road. Preferably the wall sealing is arranged to cooperate with a corresponding side sealing of the filling unit.

The top sealing of the housing and/or the wall sealing of the housing may be integrated in the housing, e.g. by means of two-component injection moulding.

A bottom wall of the housing may comprise at least one drainage hole providing a fluid connection from the filling unit to the conduit. Correspondingly, a bottom of the filling unit, e.g. at the tubular structure, may comprise at least one drainage hole, through which the washer fluid can pass when being filled. One, two, three, four or more drainage holes may be utilized.

The hatch may comprise at least one guide, e.g. a rail, adapted to cooperate with a protruding member, e.g. a pin, comprised in the filling unit. The protruding member may be arranged to be able to slide in the guide, such that the protruding member can follow the displacement of the hatch by sliding along the guide, when the hatch is transited from the closed position to the open position. The protruding member may e.g. have a mushroom shape with a head with a larger diameter than a stem, with the head having a large enough diameter to fit in the guide but no to come out through the guide. The conduit may be flexible to facilitate this displacement, see above. The washer fluid system may comprise one, two, three or more guides with a corresponding number of protruding members.

The invention further relates to a vehicle comprising the washer fluid system as described herein.

### BRIEF DESCRIPTION OF THE DRAWINGS

The present invention will hereinafter be further explained by means of non-limiting examples with reference to the appended drawings wherein:
- Fig. 1: is a schematic view of a vehicle according to the invention.
- Fig. 2: shows a washer fluid system according to the invention.
- Fig. 3: shows another washer fluid system according to the invention.
- Fig. 4: shows yet a washer fluid system according to the invention.
- Fig. 5a: shows yet another washer fluid system according to the invention.
- Fig. 5b: shows a further washer fluid system according to the invention.
- Fig. 6: shows an alternative hinge of the filling unit.

It should be noted that the appended drawings are schematic and that individual components are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, as defined by the appended claims. A feature from one embodiment may be combined with one or more features of any other embodiment.

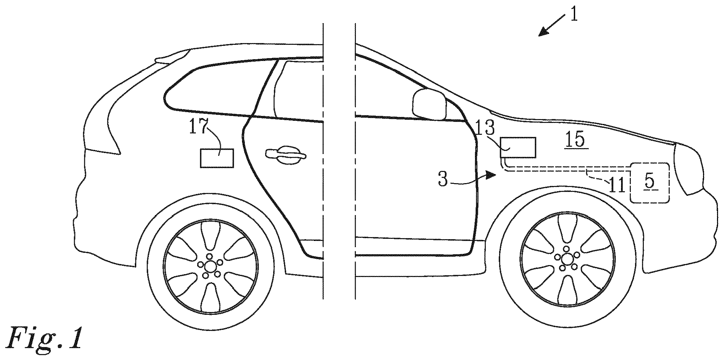

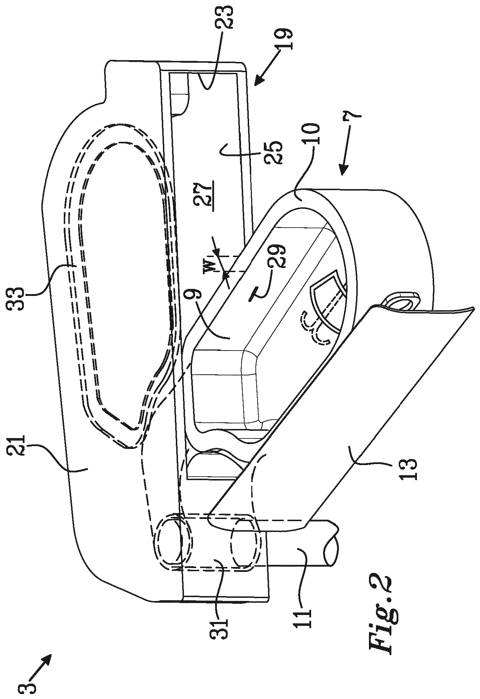

Figure 1 illustrates a vehicle 1 according to the present invention. The vehicle 1 comprises a washer fluid system 3 according to a first embodiment of the present invention. The washer fluid system comprises a reservoir 5 adapted to contain washer fluid, a filling unit 7 comprising an aperture 9 for filling washer fluid into the reservoir 5 and a conduit 11 connecting the filling unit 7 to the reservoir 5. Figure 2 more detailedly shows the filling unit 7 and a part of the conduit 11.

Directions as used herein, e.g. horizontal, vertical, lateral, relate to when the washer fluid system 3 is mounted in the vehicle 1, which stands on flat ground. The washer fluid system 3 may be manufactured, stored, transported and sold as a separate unit. In that case the directions may differ from when mounted in the vehicle 1.

A hatch 13 forms a part of a body of the vehicle 1. The hatch 13 therefore typically has a corresponding surface treatment as the body of the vehicle 1, e.g. having the same colour. In the illustrated embodiment, the hatch 13 forms a part of a front fender 15, but the hatch may also be located elsewhere in the vehicle, e.g. forming a part of the grill, a bonnet, any of the doors or a rear fender. It has been found convenient to provide the hatch 13 at the same side of the vehicle 1 as a tank filler cap 17, such that washer fluid and fuel can be filled from the same side of the vehicle 1.

The hatch 13 has a closed position, as illustrated in Figure 1, and an open position, as illustrated in Figure 2. The filling unit 7 is attached to the hatch 13, by a side wall of the filling unit being attached to the hatch 13, such that the filling unit 7 is displaced together with the hatch 13 when the hatch 13 transits from the closed position to the open position, the filling unit 7 thereby transiting from an inactive position, as illustrated in Figure 1, to a fill position, as illustrated in Figure 2. In the fill position, it is easy to fill washer fluid into the filling unit 7, since the filling unit 7 is easily accessible.

The washer fluid system 3 further comprises a housing 19 located behind the hatch 13. The housing comprises a ceiling 21, a side wall 23 and a bottom wall 25. The housing 19 contains the filling unit 7 when in the inactive position. Further, the housing 19 comprises an opening 27, through which the filling unit 7 is transitable from the inactive position to the fill position. The hatch 13 is in the closed position adapted to cover the opening 27 of the housing 19. Thereby the filling unit 7 is completely contained in the housing 19, e.g. when driving or parking the vehicle 1.

The aperture 9 of the filling unit 7 preferably has an oblong shape, as in the illustrated embodiment of Figure 2, which facilitates filling of the washer fluid. The aperture 9 is further preferably large enough to help a person performing the filling not to pour any washer fluid outside of the aperture 9.

A side wall of the filling unit 7 comprises an upper wall portion 10, which is substantially horizontal. A width w of the upper wall portion 10 may be in the range of 2-20 mm, preferably 5-15 mm.

The hatch 13 may be opened by the person going to fill washer fluid by pushing the hatch 13 inwards, such that it is released and pops out. Alternatively, the person may press a button or other control element on the inside or outside of the vehicle 1. The hatch 13 may then be manually displaced to the open position by the person or the hatch 13 may be biased towards the open position by e.g. a spring. Thereafter the person can fill the washer fluid, e.g. until a washer fluid level is visible in the filling unit 7. Preferably, the washer fluid level is not filled more than until it reaches a level 29, e.g. labelled as MAX. Thereafter the person closes the hatch 13. Hence, with the washer fluid system 3 according to the invention, it is possible to considerably reduce the number of steps for filling washer fluid as compared to a prior art washer fluid system.

In the illustrated embodiment of Figure 2, the hatch 13 is opened by means of a pivotal displacement, which occurs around a pivot arm, which forms part of the filling unit 7, herein illustrated as being an integral part of the filling unit 7. The pivot arm constitutes or comprises a tubular structure 31, which extends in a vertical direction to connect to the conduit 11. Thereby the filling unit 7 itself comprises a hinge. A side wall of the tubular structure 31 facing in a direction towards the aperture 9 of the filling unit 7 is at least partly open, such that the washer fluid can flow from the aperture 9, via the tubular structure 31 and the conduit 11 to the reservoir 5 during filling of washer fluid.

The ceiling 21 of the housing 19 comprises a top sealing 33, which is located in such a way that the top sealing 33 seals between the upper wall portion 10 of the filling unit 7 and the ceiling 21, when the filling unit 7 is in its inactive position. Hence, the top sealing 33 seals in the vertical direction. Thereby it is prevented that washer fluid is splashed during driving on e.g. a bumpy road. Preferably, the top sealing 33 is being integrated into the housing 19 when manufacturing the housing 19, e.g. by means of two-component moulding. It would also be possible, however not illustrated, to have a corresponding sealing at the upper wall portion 10.

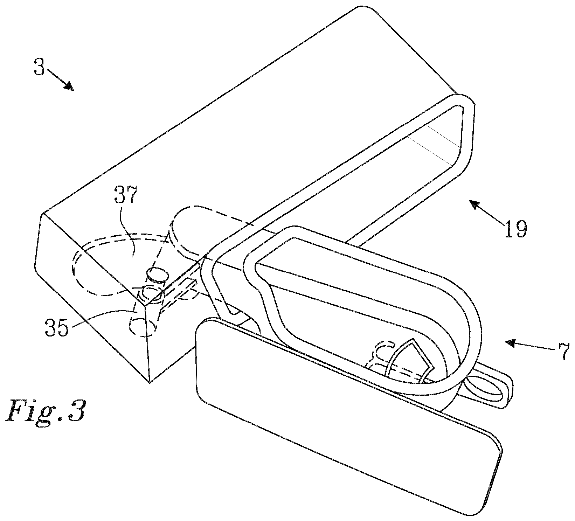

As an alternative to utilizing the pivot arm 31 as part of the fluid connection, the pivot arm 35 may be arranged separately from the tubular structure 31, as is illustrated in Figure 3. However, nevertheless the pivot arm 35 preferably forms an integral part of the filling unit 7. In the embodiment illustrated in Figure 3, the bottom wall of the housing 19 comprises an opening 37, which is shaped as a portion of a circle to allow the pivotal displacement of the filling unit 7.

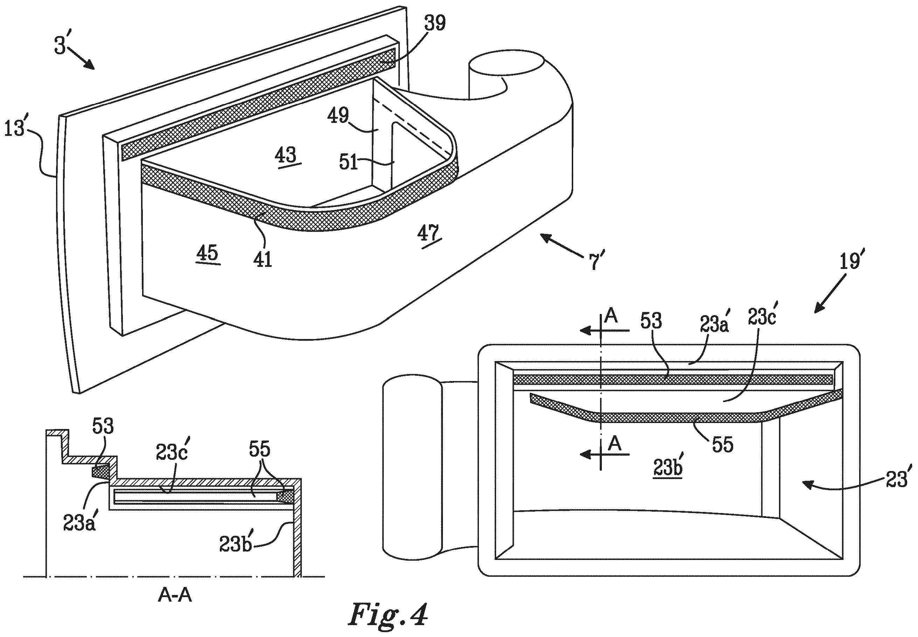

As an alternative or a complement to the vertical sealing, it is possible to seal in a lateral direction, see the embodiment of the washer fluid system 3' illustrated in Figure 4, in which first and second side sealings 39, 41 are adapted to seal in the lateral direction between a filling unit 7' and a housing 19'. A first side wall 43 of the filling unit 7' is attached to the hatch 13'. The second, third and fourth side walls 45, 47, 49 are directed towards the side wall 23' of the housing 19'. The fourth side wall 49 of the filling unit 7' has an opening 51 for leading the washer fluid to the conduit 11. In this embodiment, there is no horizontal upper wall portion 10 like in the embodiment of Figure 2. Instead the side walls 43, 45, 47, 49 are vertical or substantially vertical. The flow of washer fluid is similar as for the washer fluid system illustrated in Figure 2.

The first side wall 43 located at the hatch 13' protrudes above the other side walls 45, 47, 49. The first side sealing 39 is located in the protruding portion of the first side wall 43, such that the first side sealing 39 is located above the other side walls 45, 47, 49 and faces towards the housing 19'. The housing 19' comprises a corresponding first wall sealing 53 facing outwards. When the filling unit 7' is in the inactive position, the first side sealing 39 of the filling unit 7' thus seals against the first wall sealing 53 of the housing 19'.

An outside of the side walls 45, 47, 49, i.e. the side facing the housing 19' comprises a second side sealing 41. The second side sealing 41 is located vertically below the first sealing 39. The housing 19' comprises a corresponding second wall sealing 55 facing outwards. When the filling unit 7' is in the inactive position, the second side sealing 41 of the filling unit 7' thus seals against the second wall sealing 55 of the housing 19'. The second wall sealing 55 of the housing 19' is thus located vertically below the first wall sealing 53 and laterally closer to a centre of the vehicle 1. The side wall 23' of the housing thus has a stepwise configuration, with an upper portion 23a' providing a seat for the first wall sealing 53 and a lower portion 23b' providing a seat for the second wall sealing 55 and a step portion 23c' therebetween. The step portion 23c' will act as a cover for the aperture of the filling unit 7' in the inactive position. The configuration of the step portion 23c', e.g. its inclination is selected to correspond to that of the filling unit 7' in order to provide the desired sealing of the filling unit 7' in the inactive position.

The side and wall sealings 39, 41, 53, 55, together with the part of step portion 23c' of the side wall 23' being located above for the aperture of the filling unit 7', help to prevent that washer fluid is splashed during driving on e.g. a bumpy road. Preferably, the first side sealing 39 and the second side sealing 41 of the filling unit 7' are being integrated into the filling unit 7', when manufacturing it e.g. by means of two-component moulding. Correspondingly, preferably the first wall sealing 53 and the second wall sealing 55 are being integrated into the housing 19' when manufacturing the housing 19', e.g. by means of two-component moulding. It would also be feasible to only use sealings in either the side wall of the filling unit 7' or in the side wall 23' of the housing 19'.

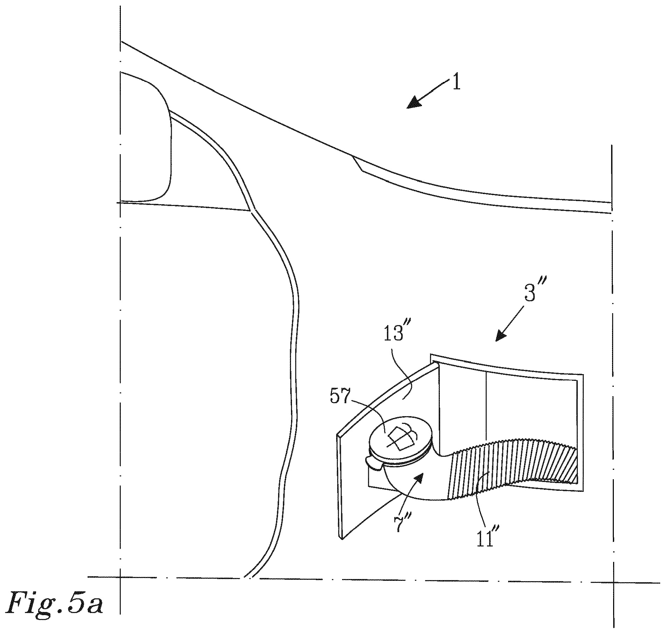

Figure 5a illustrates yet another embodiment of the washer fluid system 3", in which the conduit 11" is flexible, since a portion of it has a flexible wall, illustrated as a tube with an expandable corrugated wall. The hatch 13" is hingedly connected to the vehicle body, e.g. to the housing. The filling unit 7" is attached to the hatch 13". Due to the flexibility of the conduit 11", the filling unit 7" is displaced together with the hatch 13", when the hatch 13" is transited to the open position. During this displacement to the fill position of the filling unit 7", the conduit 11" is being curved to follow the displacement of the hatch 13". Further, the length of the conduit 11" may be increased during the displacement by means of the expandable corrugated wall. The flexible portion of the conduit 11" may be curved by at least 90 degrees or at least 135 degrees, e.g. depending on how far the hatch 13" is pivoted.

In the illustrated embodiment, the filling unit 7" comprises a cover 57 to prevent any splash, but it would also be possible to seal the filling unit 7" of this embodiment with any of the sealings 33, 39, 41, 53, 55 for vertical and/or lateral sealing described above in conjunction with Figures 2 and 4.

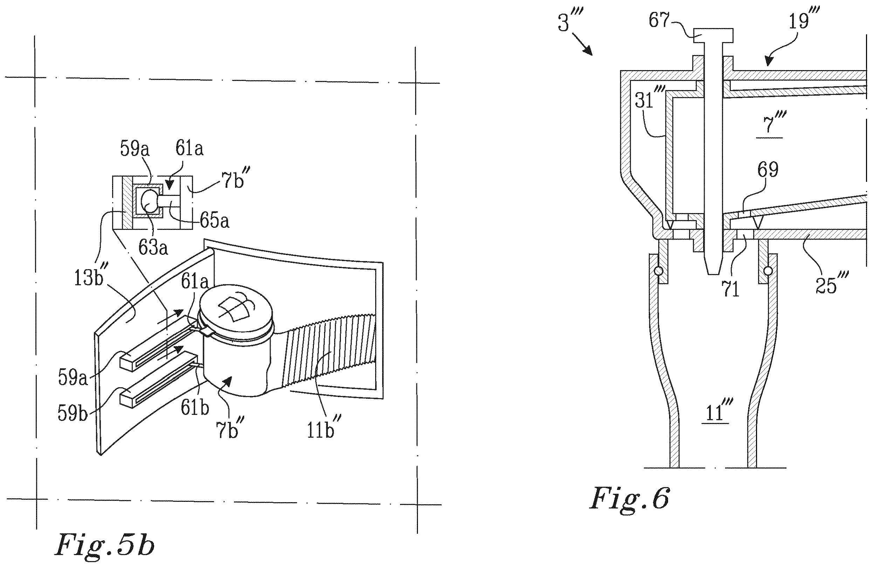

Figure 5b illustrates a further embodiment of the washer fluid system. The hatch 13b" is hingedly connected to the vehicle body, e.g. to the housing. The filling unit 7b" is movably attached to the hatch 13b" by means of guides, illustrated as rails 59a, 59b in the hatch 13b" and corresponding protruding members, illustrated as pins 61a, 61b. The pins 61a, 61b are adapted to slide in a respective rail 59a, 59b. Thereby filling unit 7b" is displaced together with the hatch 13", when the hatch 13" is transited to the open position. The pin 61a, 61b may have a mushroom shape having a head 63a with a larger diameter than a stem 65a. The rail 59a, 59b is then preferably configured such that the head 63a fits in the rail 59a, 59b such that the head 63a is able to slide along the rail 59a, 59b. However, the head 63a has a large enough diameter no to come out through the rail 59a, 59b. The conduit 11b" may flexible in a similar way as for the embodiment of Figure 5a, e.g. by having an expandable corrugated wall. The length of the conduit 11b" may be increased during the displacement by means of the expandable corrugated wall. The guides 59a, 59b and pins 61a, 61b would be feasible also for the other embodiments of the washer fluid system described herein. The washer fluid system may then comprise one, two, three or more rails 59a, 59b with a corresponding number of pins 61a, 61b.

Figure 6 shows an alternative hinge for the filling unit 7'" in an alternative washer fluid system 3"'. A pivot pin 67 is utilized as a pivot axis for the filling unit 7'". The pivot pin 67 is rotatably attached to the housing 19'" and goes through the tubular structure 31'" of the filling unit 7"'. At a bottom of the tubular structure 31'", there are drainage holes 69, through which the washer fluid can pass when being filled. The bottom wall 25'" of the housing 19'" also comprises drainage holes 71, through which the washer fluid can pass when being filled. The washer fluid thereafter flows onwards through the conduit 11'" to the reservoir 5.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A washer fluid system (3, 3', 3", 3"') for a vehicle (1), said washer fluid system (3, 3', 3", 3"') comprising
- a reservoir (5), adapted to contain washer fluid,
- a filling unit (7, 7', 7", 7"') comprising an aperture (9) for filling washer fluid into said reservoir (5),
- a conduit (11, 11", 11"') providing a fluid connection from said filling unit (7, 7', 7", 7"') to said reservoir (5),
said filling unit (7, 7', 7", 7"') being transitable between an inactive position and a fill position,
said washer fluid system (3, 3', 3", 3"') further comprises a hatch (13, 13', 13") being transitable between a closed position and an open position by means of a displacement comprising a pivotal displacement around a pivot arm (31, 35, 67), said filling unit (7, 7', 7", 7'") being attached to, or integrated with, said hatch (13, 13', 13"), such that said filling unit (7, 7', 7", 7"') is displaced together with said hatch (13, 13', 13") when transiting from said closed position to said open position, said filling unit (7, 7', 7", 7'") thereby transiting from said inactive position to said fill position, said filling unit (7, 7', 7'") comprises a tubular structure (31, 31'"), adapted to extend in a vertical direction to connect to said conduit (11, 11"') **characterized in that** the pivot arm (31, 35, 67) constitutes or comprises the tubular structure (31) which extends in a vertical direction to connect to the conduit (11).

2. The washer fluid system (3, 3', 3", 3"') according to claim 1, wherein said hatch (13, 13', 13") is configured to form a part of a body of said vehicle (1), e.g. a part of a fender (15), door or bonnet of said vehicle (1).

3. The washer fluid system (3, 3', 3", 3"') according to claim 1 or 2, wherein said pivot arm (31, 35, 67) is comprised in or constitutes a part of said filling unit (7, 7', 7", 7"').

4. The washer fluid system (3") according to any one of the preceding claims, wherein said conduit (11"), or at least a portion of said conduit (11"), is flexible, e.g. by being curvable and/or by having a variable length.

5. The washer fluid system (3, 3', 3", 3"') according to any one of the preceding claims, wherein said washer fluid system (3, 3', 3", 3"') comprises a housing (19, 19"') adapted to contain said filling unit (7, 7', 7", 7"') when in said inactive position, said housing (19, 19"') having an opening (27), through which said filling unit (7, 7', 7", 7'") is transitable to said fill position, said hatch (13, 13', 13") in said closed position being adapted to cover said opening (27) of said housing (19, 19"').

6. The washer fluid system (3) according to claim 5, wherein said housing (19) comprises a ceiling (21) adapted to form a cover of said aperture (9) of said filling unit (7), when said filling unit (7) is in said inactive position.

7. The washer fluid system (3) according to claim 6, wherein a side wall of said filling unit (7) comprises an upper wall portion (10) being substantially horizontal and said ceiling (21) comprises a top sealing (33) adapted to seal between said ceiling (21) and said upper wall portion (10) of said filling unit (7) around at least a portion of a circumference of said aperture (9) of said filling unit (7).

8. The washer fluid system (3') according to any one of claims 5-7, wherein a side wall (43, 45, 47, 49) of said filling unit (7') comprises a side sealing (39, 41) adapted to seal between said filling unit (7') and a side wall (23') of said housing (19').

9. The washer fluid system (3') according to claim 8, wherein said side sealing (39, 41) of said filling unit (7') is integrated in said filling unit (7'), e.g. by two-component injection moulding.

10. The washer fluid system (3') according to any one of claims 5-9, wherein said side wall (23') of said housing comprises a wall sealing (53, 55) adapted to seal between said filling unit (7') and said side wall (23') of said housing.

11. The washer fluid system (3, 3') according to claim 5 and/or 10, wherein said top sealing (33) and/or said wall sealing (53, 55) of said housing (19, 19') is integrated in said housing (19, 19'), e.g. by two-component injection moulding.

12. The washer fluid system (3"') according to any one of claims 5-11, wherein a bottom wall (25"') of said housing (19"') comprises at least one drainage hole (71) providing a fluid connection from said filling unit (7"') to said conduit (11'").

13. The washer fluid system according to any one of the preceding claims, wherein said hatch (13b") comprises at least one guide (59a, 59b) adapted to cooperate with a protruding member (61a, 61b) comprised in said filling unit (7b").

## Patentansprüche

1. Scheibenreinigungssystem (3, 3', 3", 3"') für ein Fahrzeug (1), wobei das Scheibenreinigungssystem (3, 3', 3", 3''') umfasst:
- einen Behälter (5), der für die Aufnahme von Waschflüssigkeit ausgelegt ist,
- eine Fülleinheit (7, 7', 7'', 7'''), die eine Öffnung (9) zum Einfüllen von Waschflüssigkeit in den Behälter (5) umfasst,
- eine Leitung (11, 11'', 11'''), die eine Flüssigkeitsverbindung von der Fülleinheit (7, 7', 7'', 7''') zu dem Behälter (5) bereitstellt,
wobei die Fülleinheit (7, 7', 7'', 7''') zwischen einer inaktiven Position und einer Füllposition überführbar ist,
wobei das Scheibenreinigungssystem (3, 3', 3", 3''') ferner eine Klappe (13, 13', 13'') umfasst, die durch eine Verschiebung, die eine Schwenkverschiebung um einen Schwenkarm (31, 35, 67) umfasst, zwischen einer geschlossenen Position und einer geöffneten Position überführbar ist, wobei die Fülleinheit (7, 7', 7'', 7''') an der Klappe (13, 13', 13'') angebracht oder mit dieser integriert ist, sodass die Fülleinheit (7, 7', 7'', 7''') zusammen mit der Klappe (13, 13', 13'') beim Übergang von der geschlossenen Position in die geöffnete Position verschoben wird, wobei die Fülleinheit (7, 7', 7'', 7''') dadurch von der inaktiven Position in die Füllposition übergeht, wobei die Fülleinheit (7, 7', 7''') eine rohrförmige Struktur (31, 31''') umfasst, die dazu ausgelegt ist, sich in einer vertikalen Richtung zu erstrecken, um mit der Leitung (11, 11''') verbunden zu werden, **dadurch gekennzeichnet, dass** der Schwenkarm (31, 35, 67) die rohrförmige Struktur (31) bildet oder umfasst, die sich in einer vertikalen Richtung erstreckt, um sich mit der Leitung (11) zu verbinden.

2. Scheibenreinigungssystem (3, 3', 3", 3''') gemäß Anspruch 1, wobei die Klappe (13, 13', 13'') dazu ausgelegt ist, einen Teil einer Karosserie des Fahrzeugs (1) zu bilden, z. B. einen Teil eines Kotflügels (15), einer Tür oder einer Motorhaube des Fahrzeugs (1).

3. Scheibenreinigungssystem (3, 3', 3", 3''') gemäß Anspruch 1 oder 2, wobei der Schwenkarm (31, 35, 67) die Fülleinheit (7, 7', 7'', 7''') umfasst oder einen Teil davon bildet.

4. Scheibenreinigungssystem (3'') gemäß einem der vorhergehenden Ansprüche, wobei die Leitung (11'') oder mindestens ein Abschnitt der Leitung (11'') biegsam ist, z. B. indem sie krümmbar ist und/oder eine variable Länge aufweist.

5. Scheibenreinigungssystem (3, 3', 3", 3''') gemäß einem der vorhergehenden Ansprüche, wobei das Scheibenreinigungssystem (3, 3', 3", 3''') ein Gehäuse (19, 19''') umfasst, das dazu ausgelegt ist, die Fülleinheit (7, 7', 7'', 7''') zu enthalten, wenn es sich in der inaktiven Position befindet, wobei das Gehäuse (19, 19''') eine Öffnung (27) aufweist, durch die die Fülleinheit (7, 7', 7'', 7''') in die Füllposition überführbar ist, wobei die Klappe (13, 13', 13'') in der geschlossenen Position dazu ausgelegt ist, die Öffnung (27) des Gehäuses (19, 19''') abzudecken.

6. Scheibenreinigungssystem (3) gemäß Anspruch 5, wobei das Gehäuse (19) eine Gehäusedecke (21) umfasst, die dazu ausgelegt ist, eine Abdeckung der Öffnung (9) der Fülleinheit (7) zu bilden, wenn sich die Fülleinheit (7) in der inaktiven Position befindet.

7. Scheibenreinigungssystem (3) gemäß Anspruch 6, wobei eine Seitenwand der Fülleinheit (7) einen oberen Wandabschnitt (10) umfasst, der im Wesentlichen horizontal ist, und die Gehäusedecke (21) eine obere Dichtung (33) umfasst, die dazu ausgelegt ist, zwischen der Gehäusedecke (21) und dem oberen Wandabschnitt (10) der Fülleinheit (7) um mindestens einen Abschnitt eines Umfangs der Öffnung (9) der Fülleinheit (7) herum abzudichten.

8. Scheibenreinigungssystem (3') gemäß einem der Ansprüche 5-7, wobei eine Seitenwand (43, 45, 47, 49) der Fülleinheit (7') eine Seitendichtung (39, 41) umfasst, die dazu ausgelegt ist, zwischen der Fülleinheit (7') und einer Seitenwand (23') des Gehäuses (19') abzudichten.

9. Scheibenreinigungssystem (3') gemäß Anspruch 8, wobei die Seitendichtung (39, 41) der Fülleinheit (7') in die Fülleinheit (7') integriert ist, z. B. durch Zweikomponentenspritzgießen.

10. Scheibenreinigungssystem (3') gemäß einem der Ansprüche 5-9, wobei die Seitenwand (23') des Gehäuses eine Wanddichtung (53, 55) umfasst, die dazu ausgelegt ist, zwischen der Fülleinheit (7') und der Seitenwand (23') des Gehäuses abzudichten.

11. Scheibenreinigungssystem (3, 3') gemäß Anspruch 5 und/oder 10, wobei die obere Dichtung (33) und/oder die Wanddichtung (53, 55) des Gehäuses (19, 19') in das Gehäuse (19, 19') integriert ist, z. B. durch Zweikomponentenspritzgießen.

12. Scheibenreinigungssystem (3''') gemäß einem der Ansprüche 5-11, wobei eine untere Wand (25''') des Gehäuses (19''') mindestens ein Abflussloch (71) umfasst, das eine Flüssigkeitsverbindung von der Fülleinheit (7''') zu der Leitung (11''') bereitstellt.

13. Scheibenreinigungssystem gemäß einem der vorhergehenden Ansprüche, wobei die Klappe (13b'') mindestens eine Führung (59a, 59b) umfasst, die dazu ausgelegt ist, mit einem hervorstehenden Element (61a, 61b) zusammenzuwirken, das in der Fülleinheit (7b'') enthalten ist.

## Revendications

1. Système de fluide de lave-glace (3, 3', 3", 3'") pour un véhicule (1), ledit système de fluide de lave-glace (3, 3', 3", 3''') comprenant
un réservoir (5), conçu pour contenir un fluide de lave-glace,
une unité de remplissage (7, 7', 7'', 7''') comprenant une ouverture (9) pour le remplissage du fluide de lave-glace dans ledit réservoir (5),
un conduit (11, 11'', 11''') assurant une liaison fluidique de ladite unité de remplissage (7, 7', 7'', 7''') audit réservoir (5),
ladite unité de remplissage (7, 7', 7'', 7''') pouvant passer à une position inactive ou à une position de remplissage,
ledit système de fluide de lave-glace (3, 3', 3", 3''') comprenant en outre une trappe (13, 13', 13'') pouvant passer à une position fermée ou à une position ouverte au moyen d'un déplacement comprenant un déplacement pivotant autour d'un bras pivotant (31,35, 67),
ladite unité de remplissage (7, 7', 7'', 7''') étant fixée ou intégrée à ladite trappe (13, 13', 13''), de sorte que ladite unité de remplissage (7, 7', 7'', 7''') soit déplacée avec ladite trappe (13, 13', 13'') lors du passage de ladite position fermée à ladite position ouverte,
ladite unité de remplissage (7, 7', 7'', 7''') passant ainsi de ladite position inactive à ladite position de remplissage, ladite unité de remplissage (7, 7', 7''') comprenant une structure tubulaire (31, 31'''), conçue pour s'étendre dans une direction verticale pour se raccorder audit conduit (11, 11''')
**caractérisé en ce que** le bras pivotant (31, 35, 67) constitue ou comprend la structure tubulaire (31) qui s'étend dans une direction verticale pour se raccorder au conduit (11).

2. Système de fluide de lave-glace (3, 3', 3", 3''') selon la revendication 1, ladite trappe (13, 13', 13'') étant conçue pour former une partie d'une carrosserie dudit véhicule (1), par exemple une partie d'une aile (15), d'une porte ou d'un capot dudit véhicule (1).

3. Système de fluide de lave-glace (3, 3', 3", 3''') selon la revendication 1 ou 2, ledit bras pivotant (31, 35, 67) étant compris dans ou constituant une partie de ladite unité de remplissage (7, 7', 7'', 7''').

4. Système de fluide de lave-glace (3'') selon l'une quelconque des revendications précédentes, ledit conduit (11''), ou au moins une partie dudit conduit (11''), étant flexible, par exemple en étant courbable et/ou en ayant une longueur variable.

5. Système de fluide de lave-glace (3, 3', 3", 3''') selon l'une quelconque des revendications précédentes, ledit système de fluide de lave-glace (3, 3', 3", 3''') comprenant un boîtier (19, 19''') conçu pour contenir ladite unité de remplissage (7, 7', 7'', 7''') lorsqu'il est dans ladite position inactive, ledit boîtier (19, 19''') ayant une ouverture (27), à travers laquelle ladite unité de remplissage (7, 7', 7'', 7''') peut passer à ladite position de remplissage, ladite trappe (13, 13', 13'') dans ladite position fermée étant conçue pour couvrir ladite ouverture (27) dudit boîtier (19, 19''').

6. Système de fluide de lave-glace (3) selon la revendication 5, ledit boîtier (19) comprenant un plafond (21) conçu pour former un couvercle de ladite ouverture (9) de ladite unité de remplissage (7), lorsque ladite unité de remplissage (7) est dans ladite position inactive.

7. Système de fluide de lave-glace (3) selon la revendication 6, une paroi latérale de ladite unité de remplissage (7) comprenant une partie de paroi supérieure (10) qui est sensiblement horizontale et ledit plafond (21) comprenant un joint d'étanchéité supérieur (33) conçu pour assurer l'étanchéité entre ledit plafond (21) et ladite partie de paroi supérieure (10) de ladite unité de remplissage (7) autour d'au moins une partie de la circonférence de ladite ouverture (9) de ladite unité de remplissage (7).

8. Système de fluide de lave-glace (3') selon l'une quelconque des revendications 5 à 7, une paroi latérale (43, 45, 47, 49) de ladite unité de remplissage (7') comprenant un joint d'étanchéité latéral (39, 41) conçu pour assurer l'étanchéité entre ladite unité de remplissage (7') et une paroi latérale (23') dudit boîtier (19').

9. Système de fluide de lave-glace (3') selon la revendication 8, ladite étanchéité latérale (39, 41) de ladite unité de remplissage (7') étant intégrée dans ladite unité de remplissage (7'), par exemple par moulage par injection à deux composants.

10. Système de fluide de lave-glace (3') selon l'une quelconque des revendications 5 à 9, ladite paroi latérale (23') dudit boîtier comprenant un joint d'étanchéité de paroi (53, 55) conçu pour assurer l'étanchéité entre ladite unité de remplissage (7') et ladite paroi latérale (23') dudit boîtier.

11. Système de fluide de lave-glace (3, 3') selon la revendication 5 et/ou 10, ledit joint d'étanchéité supérieur (33) et/ou ledit joint d'étanchéité de paroi (53, 55) dudit boîtier (19, 19') étant intégré dans ledit boîtier (19, 19'), par exemple par moulage par injection à deux composants.

12. Système de fluide de lave-glace (3''') selon l'une quelconque des revendications 5 à 11, une paroi inférieure (25''') dudit boîtier (19''') comprenant au moins un trou de drainage (71) assurant une liaison fluidique de ladite unité de remplissage (7''') audit conduit (11''').

13. Système de fluide de lave-glace selon l'une quelconque des revendications précédentes, ladite trappe (13b'') comprenant au moins un guide (59a, 59b) conçu pour coopérer avec un élément saillant (61a, 61b) compris dans ladite unité de remplissage (7b").
